# EUROPÄISCHE PATENTSCHRIFT

(11) **EP 3 406 876 B1**
(45) Veröffentlichungstag und Bekanntmachung des Hinweises auf die Patenterteilung: **27.11.2019**
(21) Anmeldenummer: 18170960.1
(22) Anmeldetag: 07.05.2018
(51) Int. Cl.: F01N 13/18, B60K 13/04, B62D 33/06

(54) **FAHRZEUG MIT FAHRERHAUS UND CHASSIS**
VEHICLE WITH CAB AND CHASSIS
VÉHICULE AVEC CABINE ET CHÂSSIS

(30) Priorität: 23.05.2017 DE 102017111228
(43) Veröffentlichungstag der Anmeldung: 28.11.2018
(73) Patentinhaber: MAN Truck & Bus SE, 80995 München (DE)
(72) Erfinder: Scherr, Stefan, 85221 Dachau (DE)
(74) Vertreter: v. Bezold & Partner Patentanwälte - PartG mbB

(56) Entgegenhaltungen:
- DE-A1-102014 009 052
- JP-A- H0 771 249
- US-A- 5 649 685
- US-A- 6 095 460
- US-A1- 2008 142 647
- US-A1- 2010 314 504

## Beschreibung

Die Erfindung betrifft ein Fahrzeug, vorzugsweise Nutzfahrzeug, mit einem Fahrerhaus und einer Fahrzeugkomponente (z. B. einem Abgasrohr oder einem Tank), die sich zweckmäßig außen, benachbart zu dem Fahrerhaus (zum Beispiel vor, hinter oder seitlich neben dem Fahrerhaus), vorzugsweise im Wesentlichen vertikal erstreckt.

Zum Stand der Technik kann zunächst auf die US 2010/0314504 A, die US 5,649,685 A, die US 6,095,460 A und die DE 10 2014 009 052 A verwiesen werden.

Im Stand der Technik ist es bekannt, sich vertikal erstreckende Abgasrohre benachbart zu Fahrerhäusern von Lastkraftwagen, zum Beispiel Baustellenfahrzeugen, anzuordnen. Derartige Abgasrohre sind üblicherweise über eine massive, am Chassis montierte Rahmenkonstruktion chassisfest gehaltert. Nachteilhaft daran ist einerseits, dass die Rahmenkonstruktion massiv auszuführen ist, was mit hohen Kosten und mit einem hohen Gewicht verbunden ist. Nachteilhaft daran ist andererseits, dass es trotz der massiven Rahmenkonstruktionen in der Praxis vorkommt, dass aufgrund von Vibrationen, Schwingungen, Stößen, etc. die Abgasrohre brechen oder anderweitig beschädigt werden. Fahrerhausfeste Montagen hingegen erfordern nachteilhafterweise meist einen großen Übergang zwischen Abgastopf und Abgasrohr.

Eine Aufgabe der Erfindung ist es, eine Möglichkeit zu schaffen, mittels der eine funktionelle, leichtgewichtige, kostengünstige, montagefreundliche und/oder weniger beschädigungsgefährdete Montage einer zweckmäßig außen an einem Fahrerhaus angeordneten Fahrzeugkomponente erzielt werden kann.

Diese Aufgabe kann mit den Merkmalen des Hauptanspruchs gelöst werden. Vorteilhafte Weiterbildungen der Erfindung können den Unteransprüchen und der folgenden Beschreibung bevorzugter Ausführungsformen der Erfindung entnommen werden.

Die nachfolgend erwähnte Fahrzeugkomponente kann vorzugsweise ein Abgasrohr sein, so dass nachfolgend oftmals auf ein Abgasrohr Bezug genommen wird. Die Erfindung ist aber nicht auf ein Abgasrohr als Fahrzeugkomponente beschränkt, so dass die nachfolgende Beschreibung bzw. Offenbarung für eine Fahrzeugkomponente im Allgemeinen gilt. Die Fahrzeugkomponente kann z. B. ein Tank oder eine andere, vorzugsweise im Wesentlichen vertikal erstreckende, Fahrzeugkomponente sein.

Die Erfindung schafft ein Fahrzeug, vorzugsweise Nutzfahrzeug, z. B. einen Lastkraftwagen, insbesondere ein Baustellenfahrzeug. Das Fahrzeug umfasst ein Fahrerhaus und ein Chassis (zum Beispiel Fahrgestell, Fahrgestellrahmen, Längs- und/oder Querträger, etc.) und weist zweckmäßig außen eine Fahrzeugkomponente (z. B. ein Abgasrohr, ein Tank, etc.) auf. Die Fahrzeugkomponente ist vorzugweise außen benachbart zum Fahrerhaus (zum Beispiel vor, hinter oder seitlich neben dem Fahrerhaus) angeordnet und/oder erstreckt sich im Wesentlichen vertikal.

Zwischen Fahrerhaus und Chassis können fahrtbezogene Relativbewegungen auftreten, da das Fahrerhaus für den Fahrer aus Komfortgründen vorzugsweise zusätzlich vor Fahrteinflüssen abgeschirmt wird.

Zur Aufnahme des Gewichts und/oder der Beschleunigungskräfte von Abgasrohr Richtung Restfahrzeug bzw. umgekehrt, wird insbesondere eine zweifache mittelbare Befestigung des Abgasrohres einerseits am Fahrerhaus und andererseits am Chassis vorgeschlagen.

Um deren Relativbewegungen und/oder Relativverdrehungen zueinander auszugleichen, zeichnet sich der erfindungsgemäße Gegenstand eine Kompensationseinrichtung aus.

Die Fahrzeugkomponente und die Kompensationseinrichtung sind über eine (z. B. obere) fahrerhausfeste Lagerstelle und eine (z. B. untere) chassisfeste Lagerstelle gelagert.

Somit ist die Fahrzeugkomponente über die Kompensationseinrichtung mittelbar durch die fahrerhausfeste Lagerstelle und die chassisfeste Lagerstelle gelagert. Die Fahrzeugkomponente ist hierbei nicht unmittelbar an die fahrerhausfeste Lagerstelle und die chassisfeste Lagerstelle gekoppelt.

Die Kompensationseinrichtung dient vorzugsweise zur Kompensation von Relativverdrehungen und/oder Relativbewegungen zwischen dem Fahrerhaus und der Fahrzeugkomponente.

Es ist möglich, dass an dem Chassis ein chassisfestes Bauteil angeordnet ist, über das Fluid in die Fahrzeugkomponente leitbar ist, z. B. im Fall eines Abgasrohrs Abgas oder im Fall eines Tanks Kraftstoff oder Reduktionsmittel. Das chassisfeste Bauteil ist vorzugsweise an die Bewegungen und/oder Verdrehungen des Chassis gekoppelt.

Sofern z. B. ein Abgasrohr rein chassisseitig montiert würde, entstünden große Hebelkräfte auf den Anbindungspunkt des Abgasrohrs (oder eines Hilfsgestells) zum Chassis durch die Höhe des Abgasrohrs verbunden mit dem begrenzten Abstützbauraum in Fahrzeug-Fahrtrichtung. Die Folge ist ein entsprechend massiv dimensionierter Anbindungspunkt, was hinsichtlich Gewicht/Kosten/Bauraum als negativ zu beurteilen ist. Die Relativbewegungen zwischen Abgasrohr einerseits und einem chassisfesten Bauteil andererseits sind als gering einzustufen. Sofern ein z. B. Abgasrohr gemäß Stand der Technik fahrerhausfest montiert würde, insbesondere an die Bewegungen und/oder Verdrehungen des Fahrerhauses gekoppelt wäre, entständen zwischen dem Abgasrohr einerseits und dem chassisfesten Bauteil andererseits allerdings relativ große Relativbewegungen und/oder Relativverdrehungen, insbesondere während der Fahrt des Fahrzeugs über einen hügeligen Untergrund, über Schlaglöcher, bei Nick-, Kipp- und/oder Wankbewegungen des Fahrerhauses, etc.. Die technische Lösung zum Ausgleich dieser großen Relativbewegungen ist aufwendig bzw. nicht möglich. Die einfache Anbindung über das Fahrerhaus ermöglicht es auf eine massive Befestigungskonstruktion zu verzichten.

Durch die zweifache Befestigung, also die chassisfeste Lagerstelle und die fahrerhausfeste Lagerstelle, in Kombination mit der Kompensationseinrichtung kann es insbesondere ermöglicht werden, die Vorteile beider Varianten zu kombinieren, also sowohl die Relativbewegungen stark einzugrenzen, als auch die Hebelwirkung des Abgasrohrs auf den Chassisanbindungspunkt wesentlich zu reduzieren. Wesentliche Beschleunigungskräfte, v. a. aus dem oberen Bereichs des Abgasrohrs resultierend (z. B. über Brems- und Beschleunigungsvorgänge), können über das Fahrerhaus abgetragen werden. Das wesentliche Gewicht des Abgasrohres und/oder Fahrbeanspruchungen in z-Richtung können quasi ohne Hebelwirkung von der chassisseitigen Anbindung aufgenommen werden.

Die Beschleunigungskräfte, die auf das Abgasrohr wirken, können zweckmäßig zwischen dem Fahrerhaus und dem chassisfesten Bauteil funktional aufgeteilt und vorzugsweise nahe am Ort des Auftretens abgeleitet werden. Sie sind somit vorteilhaft technisch leichter beherrschbar. Den wesentlichen Anteil kann mittels der Kompensationseinrichtung das Fahrerhaus übernehmen und den Restumfang zwischen Abgasrohr und chassisfestem Bauteil kann zweckmäßig über Lösungen nach dem Stand der Technik abgewickelt werden.

Die Kompensationseinrichtung dient zweckmäßig zur Kompensation und folglich insbesondere zur Reduzierung oder im Extremfall sogar zur Verhinderung von Relativverdrehungen und/oder Relativbewegungen zwischen dem Abgasrohr, insbesondere dessen unteren Teil, und dem chassisfesten Bauteil, insbesondere dessen oberem Teil. Das wird zweckmäßig dadurch erzielt, dass das Abgasrohr nicht fahrerhausfest am Fahrerhaus montiert ist und somit Bewegungen und/oder Verdrehungen des Fahrerhauses quasi nicht unmittelbar unterworfen ist. Mittels der Kompensationseinrichtung kann zweckmäßig gewährleistet werden, dass Verdrehungen und/oder Bewegungen des Fahrerhauses nur kompensiert und somit zweckmäßig reduziert zum Abgasrohr gelangen. Wenn sich zum Beispiel das Fahrerhaus während der Fahrt über einen hügeligen Untergrund nach oben und unten bewegt, so sorgt die Kompensationseinrichtung dafür, dass sich das Abgasrohr relativ zum Fahrerhaus nicht oder nur kompensiert (reduziert oder gar nicht) nach oben und unten bewegt, so dass in der Folge Bewegungen zwischen dem Abgasrohr, insbesondere dessen unterem Teil, und dem chassisfesten Bauteil, insbesondere dessen oberem Teil, dementsprechend reduziert werden. Selbiges gilt sinngemäß für Verdrehungen.

Die Kompensationseinrichtung und somit zweckmäßig die Bewegungs- und/oder Verdrehungsentkopplungen zwischen dem Abgasrohr und dem Fahrerhaus sorgt also insbesondere dafür, dass das Abgasrohr nicht oder nur kompensiert Bewegungen und/oder Verdrehungen des Fahrerhauses folgt und alternativ oder ergänzend Relativbewegungen und/oder Relativverdrehungen zwischen dem Abgasrohr und dem chassisfesten Bauteil verkleinert oder im Extremfall sogar gänzlich verhindert werden, insbesondere selbst während der Fahrt über hügeliges Terrain.

Die Kompensationseinrichtung dient ferner zweckmäßig zur mittelbaren oder unmittelbaren Halterung des Abgasrohrs vorzugsweise am Fahrerhaus und/oder zur mittelbaren oder unmittelbaren Befestigung am Fahrerhaus, zum Beispiel dessen Rückwand oder einer dessen Seitenwände.

Es ist möglich, dass die Kompensationseinrichtung zur Kompensation von Relativverdrehungen zwischen dem Fahrerhaus und dem Abgasrohr im Wesentlichen um die Längenrichtung, die Breitenrichtung und/oder die Höhenrichtung des Fahrerhauses, insbesondere des Fahrzeugs, dient. Alternativ oder ergänzend kann die Kompensationseinrichtung zur Kompensation von Relativbewegungen zwischen dem Fahrerhaus und dem Abgasrohr im Wesentlichen in Längsrichtung, Breitenrichtung und/oder Höhenrichtung des Fahrerhauses, insbesondere des Fahrzeugs, dienen. Hieraus ergibt sich, dass im Rahmen der Erfindung die Kompensationseinrichtung Bewegungen und/oder Verdrehungen nicht zwingend in und/oder um alle Raumrichtungen (x, y, z) kompensieren muss und zweckmäßig Ausführungsformen möglich sind, bei denen Bewegungen und/oder Verdrehungen in und/oder um zumindest eine Raumrichtung (x, y, z) im Wesentlichen kompensationsfrei zwischen Fahrerhaus und Abgasrohr übertragbar sind. Die Höhenrichtung des Fahrerhauses entspricht zweckmäßig im Wesentlichen der Längsrichtung des Abgasrohrs, während die Breiten- und Längsrichtung des Fahrerhauses zweckmäßig im Wesentlichen der Radialrichtung des Abgasrohrs entspricht.

Es ist möglich, dass die Kompensationseinrichtung eine zweckmäßig obere fahrerhausfeste Lagerstelle zur Lagerung am Fahrerhaus und/oder eine zweckmäßig untere chassisfeste Lagerstelle zur Lagerung am Chassis aufweist. Die Kompensationseinrichtung ist demnach vorzugsweise einerseits fahrerhausfest und andererseits chassisfest gelagert.

Die Kompensationseinrichtung ist folglich vorzugsweise mit dem Fahrerhaus, dem Abgasrohr und dem Chassis verbunden.

Die fahrerhausfeste Lagerstelle und/oder die chassisfeste Lagerstelle kann ein Gelenk oder zumindest eine Gelenkfunktion umfassen, vorzugsweise ein Kugelgelenk oder eine Kugelgelenkfunktion. Die fahrerhausfeste Lagerstelle und/oder die chassisfeste Lagerstelle kann zum Beispiel als klassisches Kugelgelenk oder als Gummi- oder Kunststoff-Lagerung ausgeführt sein.

Die fahrerhausfeste Lagerstelle und/oder chassisfeste Lagerstelle sind vorzugsweise so ausgeführt, dass sie kein oder nur ein sehr kleines, zum Beispiel reibungsabhängiges Moment übertragen, und somit die Funktion der Verdrehungskompensation übernehmen.

Zu erwähnen ist, dass die fahrerhausfeste Lagerstelle und/oder die chassisfeste Lagerstelle zweckmäßig als Fest- oder Loslager ausgeführt sein können.

Die Kompensationseinrichtung umfasst vorzugsweise eine Teleskopeinheit und/oder ein Parallelogramm-Gestänge, vorzugsweise zur Kompensation von Relativbewegungen im Wesentlichen in Höhenrichtung des Fahrerhauses. Die Teleskopeinheit bzw. das Parallelogramm-Gestänge ist zweckmäßig zwischen der fahrerhausfesten Lagerstelle und der chassisfesten Lagerstelle angeordnet und steht somit vorzugsweise einerseits mit der fahrerhausfesten Lagerstelle und andererseits mit der chassisfesten Lagerstelle in Wirkverbindung.

Das Abgasrohr ist zweckmäßig mittelbar oder unmittelbar durch die Teleskopeinheit oder das Parallelogramm-Gestänge gehaltert.

Das Abgasrohr kann als selbsttragendes Abgasrohr ausgeführt sein oder eine Verstärkungskonstruktion umfassen, über die es vorzugsweise mit der Kompensationseinrichtung verbunden ist, insbesondere mit der Teleskopeinheit oder dem Parallelogramm-Gestänge. Die Verstärkungskonstruktion sorgt insbesondere dafür, dass das Abgasrohr mit einer dünneren Wandstärke ausgeführt werden kann und somit selbst insbesondere nicht selbsttragend ist.

Das Abgasrohr und das chassisfeste Bauteil sind wie schon zuvor erwähnt zweckmäßig voneinander bewegungs- und/oder verdrehungsentkoppelt.

Es ist möglich, dass das Abgasrohr und das chassisfeste Bauteil über ein flexibles Element miteinander in Wirkverbindung stehen. Das flexible Element kann zum Beispiel faltenbalgförmig ausgebildet sein. Das flexible Element kann einerseits mit dem chassisfesten Bauteil und andererseits mit dem Abgasrohr verbunden sein. Zwischen dem chassisfesten Bauteil und dem Abgasrohr können mittels des flexiblen Elements zweckmäßig Relativverdrehungen und/oder Relativbewegungen zwischen dem chassisfesten Bauteil und dem Abgasrohr ermöglicht werden, insbesondere in Längsrichtung und/oder in Radialrichtung (vorzugsweise in allen drei Raumrichtungen). Mit anderen Worten kann sich das chassisfeste Bauteil relativ zu dem Abgasrohr oder umgekehrt vorzugsweise im Wesentlichen frei bewegen.

Es ist möglich, dass das Abgasrohr und das chassisfeste Bauteil über einen offenen und/oder berührungslosen Übergang miteinander in Wirkverbindung stehen und der offene und/oder berührungslose Übergang zweckmäßig für die Entkopplung sorgt. Dadurch sind insbesondere Ausführungsformen umfasst, bei denen sich das chassisfeste Bauteil und das Abgasrohr nicht kontaktieren und/oder physisch nicht miteinander verbunden sind. Alternativ oder ergänzend sind dadurch insbesondere Ausführungsformen umfasst, bei denen das chassisfeste Bauteil und das Abgasrohr in Längsrichtung und/oder Radialrichtung voneinander beabstandet sind. Zwischen dem chassisfesten Bauteil und dem Abgasrohr können somit zweckmäßig Relativbewegungen in Längsrichtung und/oder in Radialrichtung (vorzugsweise in allen drei Raumrichtungen) ermöglicht werden und alternativ oder ergänzend Relativverdrehungen. Mit anderen Worten kann sich das chassisfeste Bauteil relativ zu dem Abgasrohr oder umgekehrt vorzugsweise frei bewegen.

Das chassisfeste Bauteil kann zweckmäßig in das Abgasrohr hineinragen.

Es ist möglich, dass das chassisfeste Bauteil in das Abgasrohr hineinragt, allerdings in Radialrichtung von dem Abgasrohr beabstandet ist.

Das chassisfeste Bauteil kann ebenfalls in Längsrichtung von dem Abgasrohr beabstandet sein.

Das chassisfeste Bauteil und das Abgasrohr können sich folglich in Längsrichtung des Abgasrohrs überlappen oder nicht überlappen.

Das Abgasrohr kann zweckmäßig im Übergangsbereich zwischen dem Abgasrohr und dem chassisfesten Bauteil zum Beispiel einen Trichter umfassen.

Das Abgasrohr ist vorzugsweise ein sogenanntes hochgezogenes Abgasrohr.

Das chassisfeste Bauteil und das Abgasrohr können so miteinander in Wirkverbindung stehen, dass ein Venturi-Effekt entsteht, der dazu beiträgt, dass über den offenen und/oder berührungslosen Übergang keine Abgase unerwünscht austreten.

Das Abgasrohr kann zweckmäßig einen Auffangring für herunterlaufendes Kondensat aufweisen.

Es ist möglich, dass im Übergangsbereich zwischen dem Abgasrohr und dem chassisfesten Bauteil der Durchmesser des Abgasrohrs größer ist als der Durchmesser des chassisfesten Bauteils und vorzugsweise sich stromabwärts des Übergangsbereichs wieder verjüngt ist.

Es ist möglich, dass das Abgasrohr über das Dach des Fahrerhauses hinausragt und/oder sich hinter oder seitlich neben dem Fahrerhaus zumindest abschnittsweise vertikal erstreckt.

Die Kompensationseinrichtung kann z. B. zur Halterung der Fahrzeugkomponente dienen. Alternativ oder ergänzend kann z. B. ein Teil der Fahrzeugkomponente eine oder mehrere Funktionen der Kompensationseinrichtung übernehmen. Ebenso alternativ oder ergänzend kann z. B. die Kompensationseinrichtung, insbesondere eine oder mehrere Funktionen hiervon, zumindest teilweise in der Fahrzeugkomponente integriert sein.

Im Kontext der Erfindung können die Fahrzeugkomponente und die Kompensationseinrichtung folglich z. B. voneinander separate Bauteile sein, wobei es ebenfalls möglich ist, dass eine oder mehrere Funktionen der Kompensationseinrichtung durch die Fahrzeugkomponente selbst übernommen werden oder darin integriert sein können. Die Fahrzeugkomponente kann somit vorzugsweise zumindest teilweise die Funktionen der Kompensationseinrichtung übernehmen. Mit anderen Worten kann somit die Kompensationseinrichtung z. B. zumindest teilweise als Bestandteil der Fahrzeugkomponente realisiert sein.

Erfindungsgemäß ist die Fahrzeugkomponente über die Kompensationseinrichtung (und somit insbesondere mittelbar) durch die fahrerhausfeste Lagerstelle und ebenfalls über die Kompensationseinrichtung (und somit insbesondere mittelbar) durch die chassisfeste Lagerstelle gelagert.

Die fahrerhausfeste Lagerstelle ist vorzugsweise eine obere Lagerstelle, wobei die chassisfeste Lagerstelle vorzugsweise eine untere Lagerstelle ist.

Die Kompensationseinrichtung kann z. B. als eine einzige Kompensationseinheit ausgeführt sein oder mehrere Kompensationsvorrichtungen umfassen, z. B. voneinander separierte und/oder voneinander beabstandete Kompensationsvorrichtungen. Zu erwähnen ist, dass das chassisfeste Bauteil vorzugsweise ein Abgastopf oder ein rohrförmiges Bauteil sein kann.

Zu erwähnen ist außerdem, dass die Kompensationseinrichtung vorzugsweise an der Rückwand oder einer Seitenwand des Fahrerhauses befestigt ist und/oder die Bewegungen des Fahrerhauses insbesondere Rückwand- und/oder Seitenwandbewegungen des Fahrerhauses entsprechen. Selbiges gilt alternativ oder ergänzend für Verdrehungen des Fahrerhauses. Die Kompensationseinrichtung kann ferner am Dach des Fahrerhauses befestigt sein. Zu erwähnen ist ferner, dass die Höhenrichtung des Fahrerhauses im Wesentlichen der Längsrichtung des Abgasrohrs entspricht, während die Breiten- und Längsrichtung des Fahrerhauses im Wesentlichen der Radialrichtung des Abgasrohrs entspricht.

Zu erwähnen ist außerdem, dass es möglich ist, dass zwischen dem Abgasrohr und dem Fahrerhaus Bewegungen und/oder Verdrehungen im Wesentlichen kompensationsfrei übertragen werden, so dass die Kompensationseinrichtung Bewegungen und/oder Verdrehungen nicht in und/oder um alle Raumrichtungen (x, y, z) kompensieren muss.

Zu erwähnen ist noch, dass das Fahrzeug vorzugsweise ein Nutzfahrzeug, z. B. Lastkraftwagen, insbesondere Baustellenfahrzeug sein kann, aber auch z. B. ein Schienenfahrzeug sein kann.

Die Beschreibung bzw. Offenbarung in Bezug auf das Abgasrohr im Speziellen gilt entsprechend für eine Fahrzeugkomponente im Allgemeinen.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Perspektivansicht eines Teils eines Nutzfahrzeugs gemäß einer Ausführungsform der Erfindung,
- Figur 2: zeigt eine schematische Ansicht eines Details gemäß einer Ausführungsform der Erfindung,
- Figur 3: zeigt eine schematische Ansicht eines Details gemäß einer Ausführungsform der Erfindung,
- Figur 4: zeigt eine schematische Ansicht eines Details gemäß einer nicht zur Erfindung gehörenden Ausführungsform und
- Figur 5: zeigt eine schematische Ansicht eines Details gemäß einer nicht zur Erfindung gehörenden Ausführungsform der Erfindung.

Die unter Bezugnahme auf die Figuren beschriebenen Ausführungsformen stimmen teilweise überein, so dass ähnliche oder identische Teile mit den gleichen Bezugszeichen versehen sind, und zu deren Erläuterung auch für die Beschreibung der anderen Ausführungsformen oder Figuren verwiesen wird, um Wiederholungen zu vermeiden.

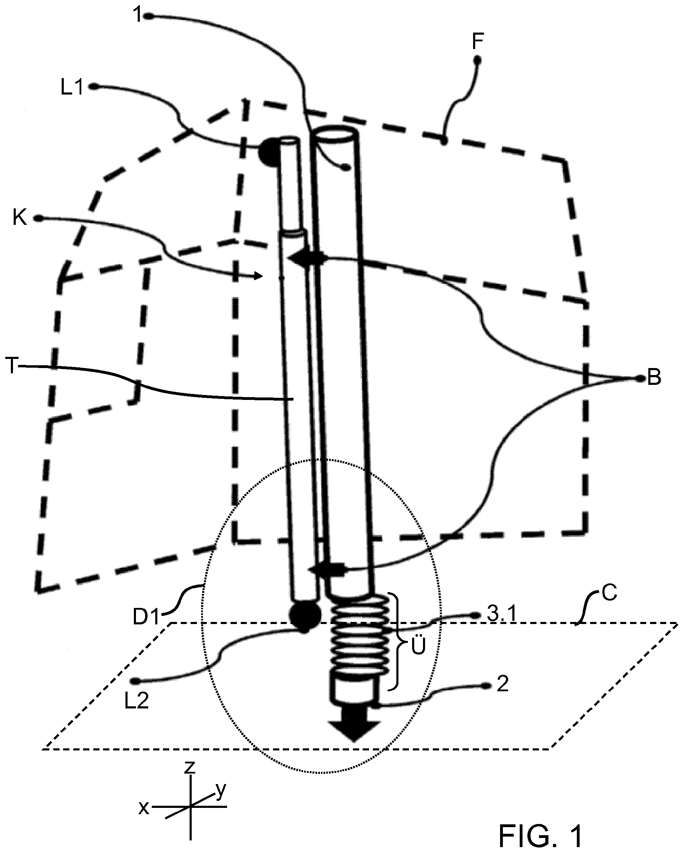

Figur 1 ein zeigt eine schematische Perspektivansicht von hinten links eines Teils eines Nutzfahrzeugs, insbesondere ein Fahrerhaus F und ein Chassis C (zum Beispiel Fahrgestell, Fahrgestellrahmen, Längs- und/oder Querträger, etc.) gemäß einer Ausführungsform der Erfindung.

Das Nutzfahrzeug ist vorzugsweise ein Lastkraftwagen, insbesondere ein Baustellenfahrzeug. Bezugszeichen x kennzeichnet die Längenrichtung des Fahrerhauses F (Nutzfahrzeugs), y die Breitenrichtung des Fahrerhauses F (Nutzfahrzeugs) und z die Höhenrichtung des Fahrerhauses F (Nutzfahrzeugs). Außen am Fahrerhaus F erstreckt sich eine Fahrzeugkomponente 1, vorzugsweise ein sogenanntes sich im Wesentlichen vertikal erstreckendes hochgezogenes Abgasrohr 1, das sich vorzugsweise über das Dach des Fahrerhauses F hinaus nach oben erstrecken kann. Das Abgasrohr 1 steht mit einem chassisfesten Bauteil 2 in Verbindung, über das Abgas von einem Verbrennungsmotor in das Abgasrohr 1 und von dort ins Freie leitbar ist. Das Bauteil 2 kann zum Beispiel ein Abgastopf oder ein damit verbundenes Teil (zum Beispiel ein Rohr, ein Anschlussflansch, etc.) sein.

Das Bauteil 2 ist am schematisch dargestellten Chassis C des Fahrerhauses F oder allgemein des Nutzfahrzeugs chassisfest angeordnet, was schematisch in Figur 1 durch den nach unten zum Chassis C weisenden Pfeil angedeutet ist. Das Bauteil 2 ist somit an die Bewegungen und Verdrehungen des Chassis C gekoppelt.

Das Abgasrohr 1 und das chassisfeste Bauteil 2 sind z. B. über ein flexibles Element oder einen offenen Übergang voneinander bewegungs- und verdrehungsentkoppelt, insbesondere so, dass Bewegungen und Verdrehungen und somit zum Beispiel Schwingungen, Stöße, Vibrationen, etc. nicht oder nur zumindest stark reduziert vom chassisfesten Bauteil 2 auf das Abgasrohr 1 oder umgekehrt übertragen werden.

Sofern das Abgasrohr 1 fahrerhausfest montiert würde und somit an die Bewegungen und Verdrehungen des Fahrerhauses F, insbesondere deren Rück- oder Seitenwand, gekoppelt wäre, entständen zwischen dem Abgasrohr 1 einerseits und dem chassisfesten Bauteil 2 andererseits relativ große Relativbewegungen und Relativverdrehungen, insbesondere während der Fahrt des Nutzfahrzeugs über einen hügeligen Untergrund, über Schlaglöcher, etc. oder allgemein während Wank-, Schwank- und/oder Kippbewegungen zwischen dem Fahrerhaus 1 und dem Chassis C.

Das Abgasrohr 1 ist deshalb nicht fahrhausfest montiert, sondern ist durch eine Kompensationseinrichtung K gehalten, was in Figur 1 durch die Befestigungsstellen B schematisch angedeutet ist. Die Kompensationseinrichtung K umfasst eine (zweckmäßig obere) fahrerhausfeste Lagerstelle L1 (Fahrerhaus-Lagerstelle) und eine (zweckmäßig untere) chassisfeste Lagerstelle L2 (Chassis-Lagerstelle) und dient zur Kompensation und folglich insbesondere zur Reduzierung oder im Extremfall sogar zur Verhinderung von Relativverdrehungen und Relativbewegungen zwischen dem unteren Teil des Abgasrohrs 1 und dem oberen Teil des Bauteils 2. Bewegungen und Verdrehungen des Fahrerhauses F werden mittels der Kompensationseinrichtung K nicht unmittelbar auf das Abgasrohr 1 übertragen, sondern nur kompensiert, also in Abhängigkeit der Größe der Bewegungen und Verdrehungen gar nicht oder nur reduziert. Das führt wiederum dazu, dass die Bewegungen und Verdrehungen zwischen dem unteren Teil des Abgasrohrs 1 und dem oberen Teil des Bauteils 2 ebenfalls reduziert oder ggf. verhindert werden.

Wenn sich zum Beispiel das Fahrerhaus F während der Fahrt über einen hügeligen Untergrund nach oben und unten bewegt, so sorgt die Kompensationseinrichtung K dafür, dass sich das Abgasrohr 1 relativ zum Fahrerhaus F nicht oder nur kompensiert/reduziert nach oben und unten bewegt, so dass in der Folge Bewegungen zwischen dem unteren Teil des Abgasrohrs 1 und dem oberen Teil des Bauteils 2 dementsprechend reduziert werden.

Das Abgasrohr 1 ist mittels der Kompensationseinrichtung K folglich kompensations- und somit ausgleichsbehaftet an Bewegungen und/oder Verdrehungen des Fahrerhauses F gekoppelt. Beschleunigungskräfte, vor allem der Masse, z. B. in Höhe der Fahrerhaus-Lagerstelle L1 und in Breitenrichtung y können an das Fahrerhaus F übertragen bzw. von ihm aufgenommen werden (z. B. Notbremsung). Hier kann, muss aber nicht zwingend eine Kompensation erfolgen.

Die Kompensationseinrichtung K umfasst eine obere, als Befestigungsgelenk ausgeführte Fahrerhaus-Lagerstelle L1 zur fahrerhausfesten Lagerung am Fahrerhaus F, eine untere, als Befestigungsgelenk ausgeführte Chassis-Lagerstelle L2 zur chassisfesten Lagerung am Chassis C und eine Teleskopeinheit T. Die Teleskopeinheit T ist einerseits an die Fahrerhaus-Lagerstelle L1 und andererseits an die Chassis-Lagerstelle L2 wirkgekoppelt und dient insbesondere zur Kompensation von Relativbewegungen im Wesentlichen in Höhenrichtung H des Fahrerhauses F bzw. im Wesentlichen in Längsrichtung des Abgasrohrs 1.

Durch geeignete Ausführung der Fahrerhaus-Lagerstelle L1, der Chassis-Lagerstelle L2 und der dazwischenliegenden Kompensationseinheit, in Figur 1 also die Teleskopeinheit T, ist es möglich, dass die Kompensationseinrichtung K zur Kompensation von Relativverdrehungen zwischen dem Fahrerhaus F und dem Abgasrohr 1 im Wesentlichen um die Längsrichtung x, die Breitenrichtung y und/oder die Höhenrichtung y des Fahrerhauses F bzw. des Nutzfahrzeugs dient und ergänzend oder alternativ zur Kompensation von Relativbewegungen zwischen dem Fahrerhaus F und dem Abgasrohr 1 im Wesentlichen in Längsrichtung x, Breitenrichtung y und/oder Höhenrichtung z des Fahrerhauses F bzw. des Nutzfahrzeugs dient, so dass selbst während der Fahrt über Schlaglöcher, unebenes Terrain, etc. der untere Teil des Abgasrohrs 1 und der obere Teil des chassifesten Bauteils 2 im Wesentlichen zueinander ausgerichtet bleiben.

Das Detail D1 in Figur 1 zeigt, dass die Bewegungs-/Verdrehungsentkoppelung zwischen dem Abgasrohr 1 und dem Bauteil 2 in deren Übergangsbereich Ü über ein flexibles, vorzugsweise faltenbalgförmiges Element 3.1 realisiert werden kann, das zwischen das Abgasrohr 1 und das Bauteil 2 zwischengekoppelt ist.

Figur 1 zeigt eine Ausführungsform, bei der die Fahrzeugkomponente 1 über die Kompensationseinrichtung K durch die fahrerhausfeste Lagerstelle L1 gelagert ist und ebenfalls über die Kompensationseinrichtung K durch die chassisfeste Lagerstelle L2 gelagert ist.

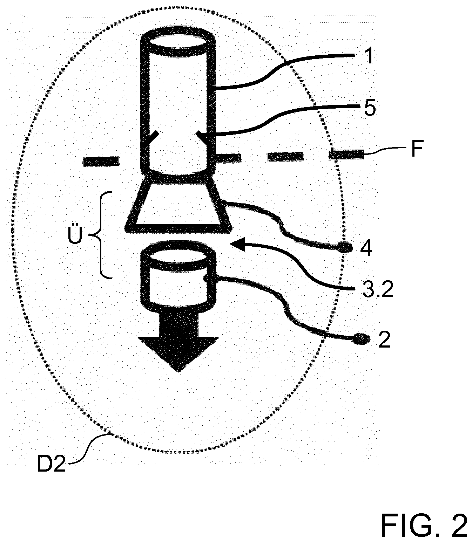

Figur 2 zeigt schematisch ein zu Detail D1 alternatives Detail D2 gemäß einer Ausführungsform der Erfindung.

Das Detail D2 zeigt eine Ausführungsform, bei der das Abgasrohr 1 und das Bauteil 2 über einen offenen und/oder berührungslosen Übergang 3.2 miteinander in Wirkverbindung stehen. Das Abgasrohr 1 und das Bauteil 2 sind in Längsrichtung des Abgasrohrs 1 voneinander beabstandet.

Das Abgasrohr ist im Übergangsbereich Ü mit einem Trichter 4 versehen. Darüber hinaus umfasst es unten einen optionalen Auffangring 5 mit einer Auffangrinne zum Auffangen von Kondensat, um ein Austreten von Kondensat bei abgestelltem Motor zu verhindern. Das aufgefangene Kondensat verdampft, sobald wieder warme Abgase über das Abgasrohr 1 geleitet werden.

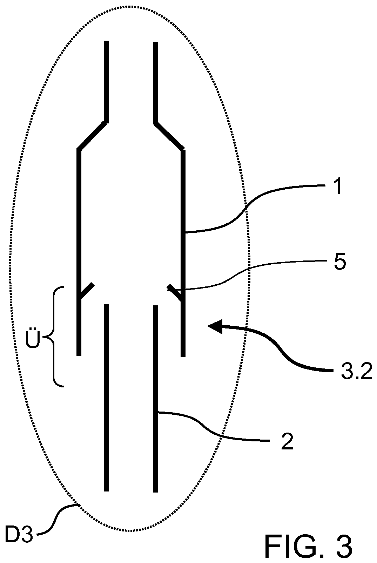

Figur 3 zeigt schematisch ein zu den Details D1 und D2 alternatives Detail D3 gemäß einer Ausführungsform der Erfindung.

Das Detail D3 zeigt ebenfalls eine Ausführungsform, bei der das Abgasrohr 1 und das Bauteil 2 über einen offenen und/oder berührungslosen Übergangsbereich 3.2 miteinander in Wirkverbindung stehen.

Eine Besonderheit des in Figur 3 gezeigten Details D3 ist, dass das Bauteil 2 in das Abgasrohr 1 hineinragt, allerdings in Radialrichtung des Abgasrohrs 1 von dem Abgasrohr 1 beabstandet bleibt, so dass zwischen dem Abgasrohr 1 und dem Bauteil 2 eine radialer Zwischenraum und zugleich eine Überlappung entsteht.

Eine andere Besonderheit des in Figur 3 gezeigten Details D3 ist ferner, dass das Bauteil 2 und das Abgasrohr 1 so miteinander in Wirkverbindung stehen, dass ein Venturi-Effekt erzeugt wird, der dazu beiträgt, dass über den offenen und/oder berührungslosen Übergang 3.2 keine Abgase unerwünscht austreten. Obwohl also der Übergang 3.2 offen und/oder berührungslos ist, gelangen hierüber keine Abgase unerwünscht nach außen.

Zu den in den Figuren 2 und 3 gezeigten Ausführungsformen ist zu erwähnen, dass im Übergangsbereich Ü zwischen dem Abgasrohr 1 und dem chassisfesten Bauteil 2 der Durchmesser des Abgasrohrs 1 größer ist als der Durchmesser des chassisfesten Bauteils 2. In Figur 2 wird das durch den Trichter 4 realisiert, in Figur 3 durch den Einsatz eines Abgasrohrs 1 mit einem gegenüber dem Bauteil 2 größeren Durchmesser, der sich oben nach zum Beispiel ungefähr 100 bis 250 mm wieder verjüngen kann, vorzugsweise im Wesentlichen auf den Durchmesser des chassisfesten Bauteils 2.

Zu allen in den Figuren 1 bis 3 gezeigten Ausführungsformen ist zu erwähnen, dass zwischen dem chassisfesten Bauteil 2 und dem Abgasrohr 1 in deren Übergangsbereich Ü ein Bewegungsfreiraum in Längsrichtung und in Radialrichtung des Abgasrohrs 1 und somit in vorzugsweise allen drei Raumrichtungen geschaffen wird, so dass sich das chassisfeste Bauteil 2 im Übergangsbereich Ü relativ zu dem Abgasrohr 1 oder umgekehrt, vorzugsweise frei, bewegen kann, wodurch zwischen dem Abgasrohr 1 und dem Bauteil 2 keine Verdrehungen/Momente und/oder keine Bewegungen/Kräfte übertragbar.sind.

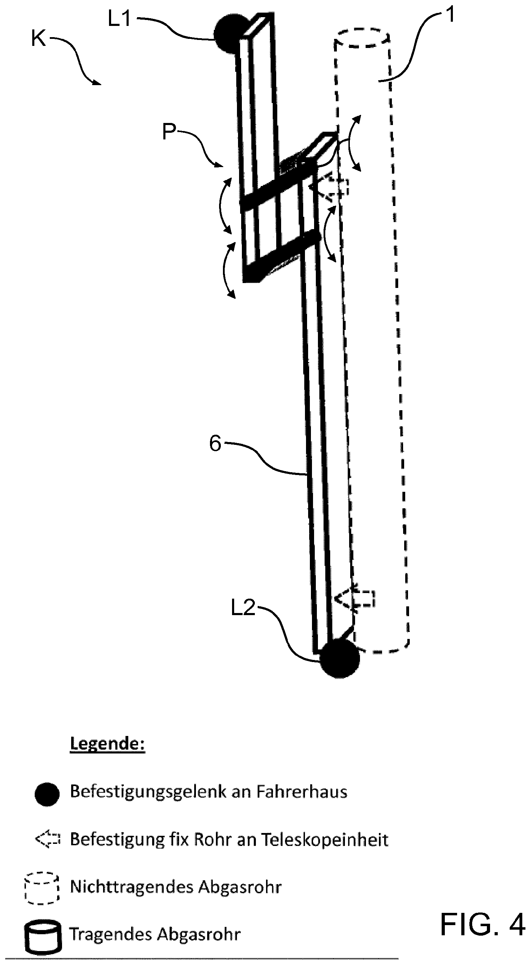

Figur 4 zeigt ein Abgasrohr 1 mit einer Kompensationseinrichtung K gemäß einer anderen Ausführungsform der Erfindung.

Eine Besonderheit der in Figur 4 gezeigten Ausführungsform ist, dass die Kompensationseinrichtung K zur Kompensation von Relativbewegungen in Höhenrichtung z keine Teleskopeinheit aufweist, sondern ein Parallelogramm-Gestänge P, dessen Freiheitsgrade durch die 4 Doppelpfeile in Figur 4 angedeutet sind.

Zudem ist das Abgasrohr 1 nicht selbsttragend ausgeführt und umfasst deshalb eine Versteifungs-/Verstärkungskonstruktion 6, über die es an die Kompensationseinrichtung K, insbesondere das Parallelogramm-Gestänge P montiert ist.

Figur 4 zeigt eine Ausführungsform, bei der die Fahrzeugkomponente 1 über die Kompensationseinrichtung K und die Verstärkungskonstruktion 6 durch die fahrerhausfeste Lagerstelle L1 gelagert ist, wobei die Fahrzeugkomponente 1 ohne Zwischenschaltung einer Kompensationseinrichtung K, aber über die Verstärkungskonstruktion 6 durch die chassisfeste Lagerstelle L2 gelagert ist.

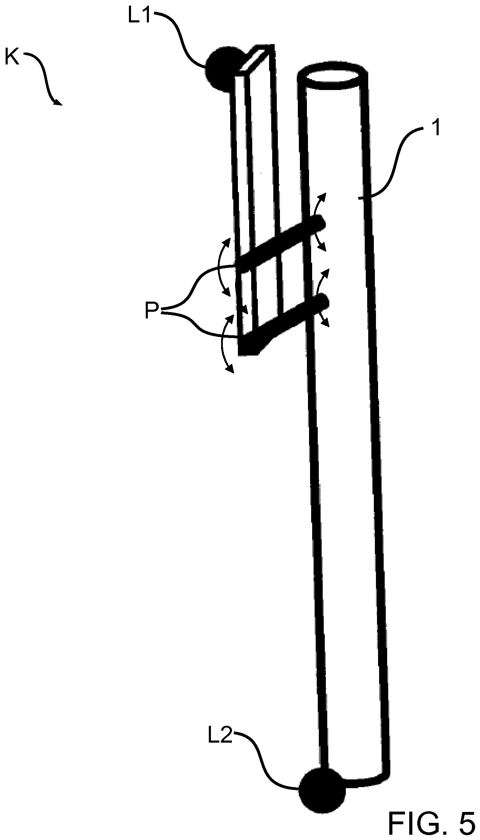

Figur 5 zeigt ein Abgasrohr 1 mit einer Kompensationseinrichtung K gemäß einer Ausführungsform der Erfindung, die im Wesentlichen der in Figur 4 gezeigten Ausführungsform entspricht.

Im Gegensatz zu Figur 4 ist das Abgasrohr 1 allerdings selbsttragend ausgeführt, so dass das Versteifungselement überflüssig wird.

Figur 5 zeigt eine Ausführungsform, bei der die Fahrzeugkomponente 1 über die Kompensationseinrichtung K durch die fahrerhausfeste Lagerstelle L1 gelagert ist, wobei die Fahrzeugkomponente 1 ohne Zwischenschaltung einer Kompensationseinrichtung K zweckmäßig direkt durch die chassisfeste Lagerstelle L2 gelagert ist.

Die Beschreibung bzw. Offenbarung der Erfindung erfolgte meist unter Bezugnahme auf ein Abgasrohr, das allerdings nur stellvertretend und somit nur beispielhaft für eine Fahrzeugkomponente steht.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen.

### Bezugszeichenliste

- 1: Fahrzeugkomponente, z. B. Abgasrohr oder Tank
- 2: Chassisfestes Bauteil
- 3.1: Flexibles Element
- 3.2: Offener und/oder berührungsloser Übergang
- 4: Trichter
- 5: Auffangring
- 6: Verstärkungskonstruktion
- K: Kompensationseinrichtung
- T: Teleskopeinheit
- P: Parallelogramm-Gestänge
- B: Befestigungskonstruktion Fahrzeugkomponente - Kompensationseinrichtung
- C: Chassis
- F: Fahrerhaus
- D1: Detail flexibler Übergang
- D2: Detail offener und/oder berührungsloser Übergang
- D3: Detail offener und/oder berührungsloser Übergang
- L1: Fahrerhausfeste Lagerstelle (Fahrerhaus-Lagerstelle)
- L2: Chassisfeste Lagerstelle (Chassis-Lagerstelle)
- Ü: Übergangsbereich Fahrzeugkomponente - chassifestes Bauteil
- x: Längsrichtung des Fahrerhauses/Fahrzeugs
- y: Breitenrichtung des Fahrerhauses/ Fahrzeugs
- z: Höhenrichtung des Fahrerhauses/Fahrzeugs

## Patentansprüche

1. Fahrzeug, vorzugsweise Nutzfahrzeug, mit einem Fahrerhaus (F), einer Fahrzeugkomponente (1), einem Chassis (C) und einer Kompensationseinrichtung (K), wobei die Fahrzeugkomponente (1) und die Kompensationseinrichtung (K) über eine fahrerhausfeste Lagerstelle (L1) und eine chassisfeste Lagerstelle (L2) gelagert sind, wobei die Kompensationseinrichtung (K) zur Kompensation von Relativverdrehungen und/oder Relativbewegungen zwischen dem Fahrerhaus (F) und der Fahrzeugkomponente (1) dient, **dadurch gekennzeichnet, dass** die Fahrzeugkomponente (1) über die Kompensationseinrichtung (K) durch die fahrerhausfeste Lagerstelle (L1) und ebenfalls über die Kompensationseinrichtung (K) durch die chassisfeste Lagerstelle (L2) gelagert ist.

2. Fahrzeug nach Anspruch 1, wobei die Kompensationseinrichtung (K) zur Kompensation von Relativverdrehungen zwischen dem Fahrerhaus (F) und der Fahrzeugkomponente (1) um die Längenrichtung (x), die Breitenrichtung (y) und/oder die Höhenrichtung (y) des Fahrerhauses (F) dient.

3. Fahrzeug nach Anspruch 1 oder 2, wobei die Kompensationseinrichtung (K) zur Kompensation von Relativbewegungen zwischen dem Fahrerhaus (F) und der Fahrzeugkomponente (1) in Längsrichtung (x), Breitenrichtung (y) und/oder Höhenrichtung (z) des Fahrerhauses (F) dient.

4. Fahrzeug nach einem der vorhergehenden Ansprüche, wobei die fahrerhausfeste Lagerstelle (L1) und/oder die chassisfeste Lagerstelle (L2) ein Gelenk oder eine Gelenkfunktion umfasst, vorzugsweise ein Kugelgelenk oder eine Kugelgelenkfunktion.

5. Fahrzeug nach einem der vorhergehenden Ansprüche, wobei die Kompensationseinrichtung (K) eine Teleskopeinheit oder ein Parallelogramm-Gestänge umfasst, vorzugsweise zur Kompensation von Relativbewegungen in Höhenrichtung (z) des Fahrzeugs (F) und/oder zwischen fahrerausfesten Lagerstelle (L1) und der chassisfesten Lagerstelle (L2).

6. Fahrzeug nach einem der vorhergehenden Ansprüche, wobei die Kompensationseinrichtung (K) zur Halterung am Fahrerhaus (F) ausgeführt ist, vorzugsweise der Rückwand oder einer Seitenwand davon.

7. Fahrzeug nach einem der vorhergehenden Ansprüche, wobei die Fahrzeugkomponente (1) als Abgasrohr (1) oder Tank ausgeführt ist.

8. Fahrzeug nach einem der vorhergehenden Ansprüche, wobei die Fahrzeugkomponente (1) als selbsttragende Fahrzeugkomponente (1) ausgeführt ist oder eine Verstärkungskonstruktion (6) umfasst, über die sie vorzugsweise mit der Kompensationseinrichtung (K) verbunden ist.

9. Fahrzeug nach einem der vorhergehenden Ansprüche, wobei an dem Chassis (C) ein chassisfestes Bauteil (2) angeordnet ist, über das Fluid in die Fahrzeugkomponente (1) leitbar ist und das vorzugsweise an die Bewegungen und/oder Verdrehungen des Chassis (C) gekoppelt ist.

10. Fahrzeug nach Anspruch 9, wobei die Fahrzeugkomponente (1) und das chassisfeste Bauteil (2) voneinander bewegungs- und/oder verdrehungsentkoppelt sind.

11. Fahrzeug nach einem der vorhergehenden Ansprüche, wobei die Fahrzeugkomponente (1) nicht chassisfest und/oder nicht fahrerhausfest angeordnet ist.

12. Fahrzeug nach einem der Ansprüche 9 bis 11, wobei die Fahrzeugkomponente (1) und das chassisfeste Bauteil (2) über ein flexibles Element (3.1) miteinander in Wirkverbindung stehen und vorzugsweise das flexible Element (3.1) faltenbalgförmig ausgebildet ist.

13. Fahrzeug nach einem der Ansprüche 1 bis 11, wobei die Fahrzeugkomponente (1) und das chassisfeste Bauteil (2) über einen offenen und/oder berührungslosen Übergang (3.2) miteinander in Wirkverbindung stehen.

14. Fahrzeug nach einem der Ansprüche 9 bis 13, wobei das chassisfeste Bauteil (2) in die Fahrzeugkomponente (1) hineinragt und/oder in Radialrichtung der Fahrzeugkomponente (1) von der Fahrzeugkomponente (1) beabstandet ist.

15. Fahrzeug nach einem der Ansprüche 9 bis 14, wobei das chassisfeste Bauteil (2) in Längsrichtung der Fahrzeugkomponente (1) von der Fahrzeugkomponente (1) beabstandet ist.

16. Fahrzeug nach einem der Ansprüche 9 bis 15, wobei zwischen der Fahrzeugkomponente (1) und dem chassisfesten Bauteil (2) ein Trichter (4) angeordnet ist.

17. Fahrzeug nach einem der Ansprüche 9 bis 16, wobei das chassisfeste Bauteil (2) und die Fahrzeugkomponente (1) so miteinander in Wirkverbindung stehen, dass ein Venturi-Effekt entsteht, der dazu beiträgt, dass über einen offenen und/oder berührungslosen Übergang (3.2) kein Fluid unerwünscht austritt.

18. Fahrzeug nach einem der vorhergehenden Ansprüche, wobei die Fahrzeugkomponente (1) über das Dach des Fahrerhauses (F) hinausragt und/oder sich hinter oder seitlich neben dem Fahrerhaus (F) zumindest abschnittsweise vertikal erstreckt.

19. Fahrzeug nach einem der vorhergehenden Ansprüche, wobei die Kompensationseinrichtung (K) zur Halterung der Fahrzeugkomponente (1) dient oder ein Teil der Fahrzeugkomponente (1) eine Funktion der Kompensationseinrichtung (K) übernimmt oder die Kompensationseinrichtung (K) zumindest teilweise in der Fahrzeugkomponente (1) integriert ist.

20. Fahrzeug nach einem der vorhergehenden Ansprüche, wobei das Fahrzeug ein Nutzfahrzeug, vorzugsweise Lastkraftwagen, insbesondere Baustellenfahrzeug ist.

## Claims

1. Vehicle, preferably utility vehicle, with a driver's cab (F), a vehicle component (1), a chassis (C) and a compensating device (K), wherein the vehicle component (1) and the compensating device (K) are mounted via a bearing point (L1) mounted on the cab and via a bearing point (L2) mounted on the chassis, wherein the compensating device (K) serves for compensating for relative rotations and/or relative movements between the cab (F) and the vehicle component (1), **characterized in that** the vehicle component (1) is mounted by means of the bearing point (L1), which is mounted on the cab, via the compensating device (K) and by means of the bearing point (L2), which is mounted on the chassis, likewise via the compensating device (K).

2. Vehicle according to Claim 1, wherein the compensating device (K) serves for compensating for relative rotations between the cab (F) and the vehicle component (1) about the longitudinal direction (x), the width direction (y) and/or the vertical direction (y) of the cab (F).

3. Vehicle according to Claim 1 or 2, wherein the compensating device (K) serves for compensating for relative movements between the cab (F) and the vehicle component (1) in the longitudinal direction (x), width direction (y) and/or vertical direction (z) of the cab (F).

4. Vehicle according to one of the preceding claims, the bearing point (L1) mounted on the cab and/or the bearing point (L2) mounted on the chassis comprising a joint or a joint function, preferably a ball and socket joint or a ball and socket joint function.

5. Vehicle according to one of the preceding claims, wherein the compensating device (K) comprises a telescopic unit or a parallelogram linkage, preferably for compensating for relative movements in the vertical direction (z) of the vehicle (F) and/or between the bearing point (L1) mounted on the cab and the bearing point (L2) mounted on the chassis.

6. Vehicle according to one of the preceding claims, wherein the compensating device (K) is designed for supporting on the cab (F), preferably on the rear wall or a side wall thereof.

7. Vehicle according to one of the preceding claims, wherein the vehicle component (1) is designed as an exhaust pipe (1) or tank.

8. Vehicle according to one of the preceding claims, wherein the vehicle component (1) is designed as a self-supporting vehicle component (1) or comprises a reinforcing structure (6) via which said vehicle component is preferably connected to the compensating device (K).

9. Vehicle according to one of the preceding claims, wherein a component (2) which is mounted on the chassis and via which fluid can be conducted into the vehicle component (1) and which is preferably coupled to the movements and/or rotations of the chassis (C) is arranged on the chassis (C).

10. Vehicle according to Claim 9, wherein the vehicle component (1) and the component (2) mounted on the chassis are decoupled from each other in terms of movement and/or rotation.

11. Vehicle according to one of the preceding claims, wherein the vehicle component (1) is arranged not in a manner mounted on the chassis and/or not in a manner mounted on the cab.

12. Vehicle according to one of Claims 9 to 11, wherein the vehicle component (1) and the component (2) mounted on the chassis are operatively connected to each other via a flexible element (3.1) and the flexible element (3.1) is preferably in the form of an expansion bellows.

13. Vehicle according to one of Claims 1 to 11, wherein the vehicle component (1) and the component (2) mounted on the chassis are operatively connected to each other via an open and/or contactless transition (3.2).

14. Vehicle according to one of Claims 9 to 13, wherein the component (2) mounted on the chassis projects into the vehicle component (1) and/or is spaced apart from the vehicle component (1) in the radial direction of the vehicle component (1).

15. Vehicle according to one of Claims 9 to 14, wherein the component (2) mounted on the chassis is spaced apart from the vehicle component (1) in the longitudinal direction of the vehicle component (1).

16. Vehicle according to one of Claims 9 to 15, wherein a funnel (4) is arranged between the vehicle component (1) and the component (2) mounted on the chassis.

17. Vehicle according to one of Claims 9 to 16, wherein the component (2) mounted on the chassis and the vehicle component (1) are operatively connected to each other in such a manner that a Venturi effect arises which contributes to no fluid undesirably escaping via an open and/or contactless transition (3.2).

18. Vehicle according to one of the preceding claims, wherein the vehicle component (1) projects beyond the roof of the cab (F) and/or extends vertically at least in sections behind or laterally next to the cab (F).

19. Vehicle according to one of the preceding claims, wherein the compensating device (K) serves for supporting the vehicle component (1) or part of the vehicle component (1) takes over a function of the compensating device (K) or the compensating device (K) is at least partially integrated in the vehicle component (1).

20. Vehicle according to one of the preceding claims, wherein the vehicle is a utility vehicle, preferably lorry, in particular construction vehicle.

## Revendications

1. Véhicule, en particulier véhicule utilitaire, avec une cabine (F), un composant de véhicule (1), un châssis (C) et un dispositif de compensation (K), dans lequel le composant de véhicule (1) et le dispositif de compensation (K) sont supportés par un point d'appui fixe de la cabine (L1) et un point d'appui fixe du châssis (L2), dans lequel le dispositif de compensation (K) sert pour la compensation de rotations relatives et/ou de mouvements relatifs entre la cabine (F) et le composant de véhicule (1), **caractérisé en ce que** le composant de véhicule (1) est supporté via le dispositif de compensation (K) par le point d'appui fixe de la cabine (L1) et également via le dispositif de compensation (K) par le point d'appui fixe du châssis (L2).

2. Véhicule selon la revendication 1, dans lequel le dispositif de compensation (K) sert pour la compensation de rotations relatives entre la cabine (F) et le composant de véhicule (1) autour de la direction longitudinale (x), de la direction transversale (y) et/ou de la direction verticale (y) de la cabine (F).

3. Véhicule selon une revendication 1 ou 2, dans lequel le dispositif de compensation (K) sert pour la compensation de mouvements relatifs entre la cabine (F) et le composant de véhicule (1) dans la direction longitudinale (x), la direction transversale (y) et/ou la direction verticale (z) de la cabine (F).

4. Véhicule selon l'une quelconque des revendications précédentes, dans lequel le point d'appui fixe de la cabine (L1) et/ou le point d'appui fixe du châssis (L2) comprend une articulation ou une fonction d'articulation, de préférence une rotule ou une fonction de rotule.

5. Véhicule selon l'une quelconque des revendications précédentes, dans lequel le dispositif de compensation (K) comprend une unité télescopique ou un mécanisme en parallélogramme, de préférence pour la compensation de mouvements relatifs dans la direction verticale (z) de la cabine (F) et/ou entre le point d'appui fixe de la cabine (L1) et le point d'appui fixe du châssis (L2).

6. Véhicule selon l'une quelconque des revendications précédentes, dans lequel le dispositif de compensation (K) est configuré pour être fixé à la cabine (F), de préférence à la paroi arrière ou une paroi latérale de celle-ci.

7. Véhicule selon l'une quelconque des revendications précédentes, dans lequel le composant de véhicule (1) est formé par un tuyau d'échappement (1) ou un réservoir.

8. Véhicule selon l'une quelconque des revendications précédentes, dans lequel le composant de véhicule (1) est formé par un composant de véhicule autoportant (1) ou comprend une structure de renforcement (6), par laquelle il est de préférence relié au dispositif de compensation (K).

9. Véhicule selon l'une quelconque des revendications précédentes, dans lequel une pièce (2) solidaire du châssis est disposée sur le châssis (C), par laquelle le fluide peut être conduit dans le composant de véhicule (1) et qui est de préférence couplée aux mouvements et/ou aux rotations du châssis (C).

10. Véhicule selon la revendication 9, dans lequel le composant de véhicule (1) et la pièce solidaire du châssis (2) sont découplés l'un de l'autre au niveau des mouvements et/ou des rotations.

11. Véhicule selon l'une quelconque des revendications précédentes, dans lequel le composant de véhicule (1) est disposé d'une façon non solidaire du châssis et/ou non solidaire de la cabine.

12. Véhicule selon l'une quelconque des revendications 9 à 11, dans lequel le composant de véhicule (1) et la pièce solidaire du châssis (2) sont en liaison active l'un avec l'autre par un élément flexible (3.1) et l'élément flexible (3.1) est de préférence réalisé sous forme de soufflet plissé.

13. Véhicule selon l'une quelconque des revendications 1 à 11, dans lequel le composant de véhicule (1) et la pièce solidaire du châssis (2) sont en liaison active l'un avec l'autre par une transition ouverte et/ou sans contact (3.2).

14. Véhicule selon l'une quelconque des revendications 9 à 13, dans lequel la pièce solidaire du châssis (2) pénètre dans le composant de véhicule (1) et/ou est espacée du composant de véhicule (1) dans la direction radiale du composant de véhicule (1).

15. Véhicule selon l'une quelconque des revendications 9 à 14, dans lequel la pièce solidaire du châssis (2) est espacée du composant de véhicule (1) dans la direction longitudinale du composant de véhicule (1).

16. Véhicule selon l'une quelconque des revendications 9 à 15, dans lequel un entonnoir (4) est disposé entre le composant de véhicule (1) et la pièce solidaire du châssis (2).

17. Véhicule selon l'une quelconque des revendications 9 à 16, dans lequel la pièce solidaire du châssis (2) et le composant de véhicule (1) sont en liaison active l'un avec l'autre, de telle manière qu'il apparaisse un effet Venturi, qui contribue à ce qu'aucun fluide ne s'échappe de façon non désirée par une transition ouverte et/ou sans contact (3.2).

18. Véhicule selon l'une quelconque des revendications précédentes, dans lequel le composant de véhicule (1) sort par le toit de la cabine (F) et/ou s'étend au moins en partie verticalement derrière ou sur le côté de la cabine (F).

19. Véhicule selon l'une quelconque des revendications précédentes, dans lequel le dispositif de compensation (K) sert pour le support du composant de véhicule (1) ou une partie du composant de véhicule (1) assure une fonction du dispositif de compensation (K) ou le dispositif de compensation (K) est au moins en partie intégré dans le composant de véhicule (1).

20. Véhicule selon l'une quelconque des revendications précédentes, dans lequel le véhicule est un véhicule utilitaire, de préférence un camion, en particulier un véhicule de chantier.
